# EUROPEAN PATENT APPLICATION

(11) **EP 4 083 991 A1**
(43) Date of publication of application: **02.11.2022**
(21) Application number: 20906453.4
(22) Date of filing: 16.12.2020
(51) Int. Cl.: G09G 5/00, G09G 5/36, G06T 19/00, G06F 3/01, G06F 3/0481

(54) **IMAGE GENERATION DEVICE, IMAGE GENERATION METHOD, AND IMAGE GENERATION PROGRAM**

(30) Priority: 23.12.2019 JP 2019232164
(71) Applicant: Sony Group Corporation, Tokyo 108-0075 (JP)
(72) Inventor: ISHIKAWA, Tsuyoshi, Tokyo 108-0075 (JP)
(74) Representative: MFG Patentanwälte Meyer-Wildhagen Meggle-Freund Gerhard PartG mbB
(86) International application number: PCT/JP2020/047058
(87) International publication number: WO 2021/131991

(57) **Abstract**

A video generation apparatus (1) according to the embodiment includes a reception unit (30), a first generation unit (32), and a display control unit (35). The reception unit (30) receives user operation. The first generation unit (32) moves the virtual camera (10) in three-dimensional virtual space (Sv) on the basis of the user operation received by the reception unit (30), thereby generating a camera viewpoint video in which the three-dimensional object (100) in the three-dimensional virtual space (Sv) is shot using the virtual camera (10). The display control unit (35) disposes, in the three-dimensional virtual space (Sv), a virtual screen (Sc) for displaying the camera viewpoint video generated by the first generation unit (32), and displays a camera trajectory (T) of the virtual camera (10) in the three-dimensional virtual space (Sv).

## Description

### Field

The present invention relates to a video generation apparatus, a method for generating a video, and a program of generating a video.

### Background

There is a technology of generating, on the basis of a real video shot from a plurality of positions in space, moving image content in which the inside of the space is viewed from a discretionary viewpoint.

### Citation List

### Patent Literature

Patent Literature 1: WO 2016/088437 A

### Summary

### Technical Problem

However, in the conventional technique, there is room for improvement in facilitating generation of moving image content. In the conventional technique, it is difficult for a general user to generate moving image content because a large amount of equipment is required to shoot the inside of space.

The present invention has been made in view of the above, and an object of the present invention is to provide a video generation apparatus, a method for generating a video, and a program of generating a video that can facilitate generation of moving image content.

### Solution to Problem

A video generation apparatus according to the embodiment includes a reception unit, a first generation unit, and a display control unit. The reception unit receives user operation. The first generation unit moves the virtual camera in three-dimensional virtual space on the basis of the user operation received by the reception unit, thereby generating a camera viewpoint video in which the three-dimensional object in the three-dimensional virtual space is shot using the virtual camera. The display control unit disposes, in the three-dimensional virtual space, a virtual screen for displaying the camera viewpoint video generated by the first generation unit, and displays a camera trajectory of the virtual camera in the three-dimensional virtual space.

### Advantageous Effects of Invention

According to an aspect of the embodiments, generation of moving image content can be facilitated.

### Brief Description of Drawings

FIG. 1 is a diagram illustrating an outline of a method for generating a video according to a first embodiment.
FIG. 2 is a diagram illustrating an example of a video displayed by the method for generating a video according to the first embodiment.
FIG. 3 is a diagram illustrating an example of an external appearance of a remote controller according to the first embodiment.
FIG. 4 is a block diagram of an information processing apparatus according to the first embodiment.
FIG. 5 is a diagram illustrating an example of key frame information according to the first embodiment.
FIG. 6 is explanatory diagrams of screen sizes.
FIG. 7 is an explanatory diagram of subject depths.
FIG. 8 is a diagram illustrating an example of a camera trajectory according to the first embodiment.
FIG. 9 is a diagram illustrating an example of a camera trajectory according to the first embodiment.
FIG. 10 is a diagram illustrating an example of a point of interest according to the first embodiment.
FIG. 11 is a diagram illustrating an example of a prohibited area according to the first embodiment.
FIG. 12 is an explanatory diagram of an imaginary line.
FIG. 13 is a diagram illustrating an example of an auxiliary image according to the first embodiment.
FIG. 14 is a diagram illustrating an example of an auxiliary image according to the first embodiment.
FIG. 15 is a diagram illustrating an example of an auxiliary image according to the first embodiment.
FIG. 16 is a schematic diagram of processing by a correction unit according to the first embodiment.
FIG. 17 is a schematic diagram of processing by the correction unit according to the first embodiment.
FIG. 18 is a schematic diagram of processing by the correction unit according to the first embodiment.
FIG. 19 is a flowchart illustrating a processing procedure executed by the video generation apparatus according to the first embodiment.
FIG. 20 is a diagram illustrating an outline of a method for processing a video according to a second embodiment.
FIG. 21 is a diagram illustrating an example of a display device according to the second embodiment.
FIG. 22 is a block diagram of a video generation apparatus according to the second embodiment.
FIG. 23 is a hardware configuration diagram illustrating an example of a computer that implements functions of a video generation apparatus.

### Description of Embodiments

Hereinafter, embodiments of the present disclosure will be described in detail with reference to the drawings. In the following embodiments, the same parts are denoted by the same reference signs, and redundant description will be omitted.

### <First Embodiment>

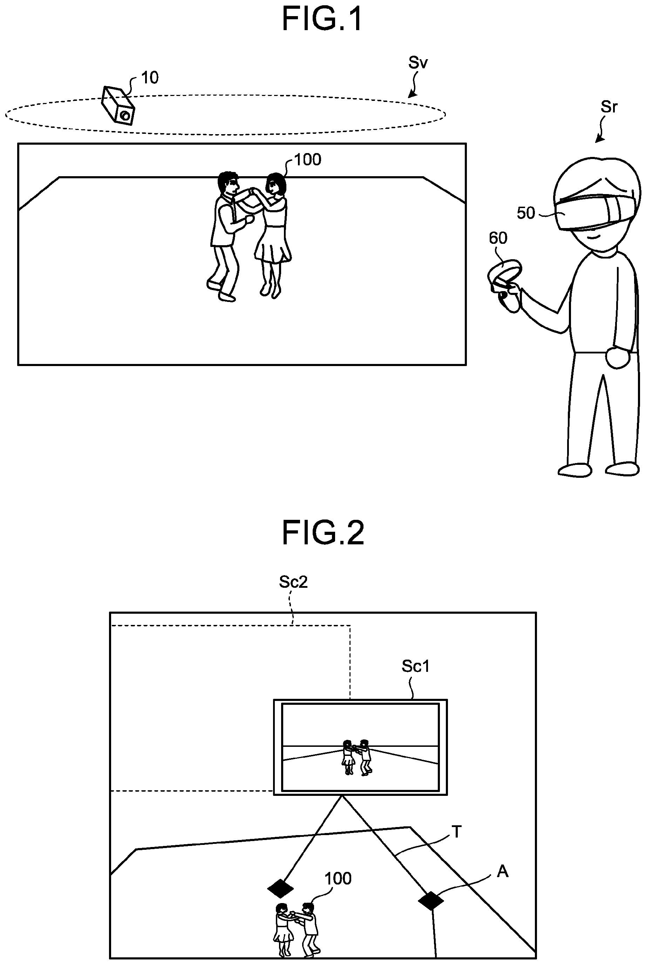

First, an outline of a method for generating a video according to a first embodiment will be described with reference to FIGS. 1 and 2.

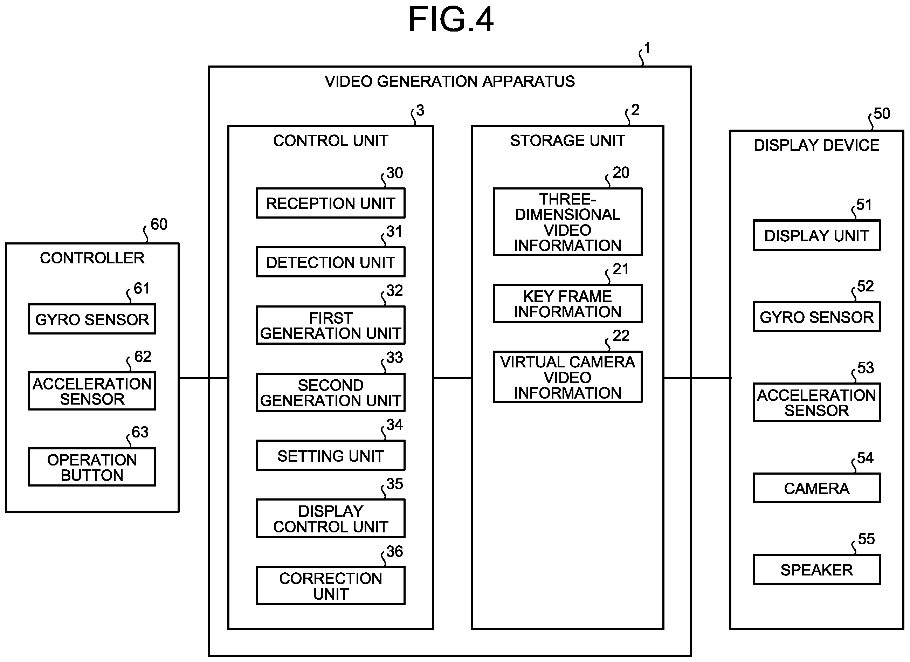

FIG. 1 is a diagram illustrating an outline of the method for generating a video according to the first embodiment. FIG. 2 is a diagram illustrating an example of a video displayed by the method for generating a video according to the first embodiment. Note that the method for generating a video according to the embodiment is executed by a video generation apparatus 1 to be described later in FIG. 4.

Furthermore, a case where three-dimensional virtual space is virtual reality (VR) space will be described below, but the three-dimensional virtual space may be augmented reality (AR) space. A case where the three-dimensional virtual space is the AR space will be described in the second embodiment.

Note that FIG. 1 illustrates a scene where a user wears a display device 50 in the real world Sr and operates a controller 60 to operate a virtual camera 10 disposed in the three-dimensional virtual space (hereinafter, virtual space Sv).

By the way, in a case of producing moving image content such as a movie, for example, a lot of production time has been conventionally required. For example, a creator who is a producer of moving image content checks a captured moving image, and repeatedly performs work such as reconstructing camerawork in accordance with images. Furthermore, in the case of producing moving image content in the real world, there is a limit to camerawork, which is an obstacle in producing attractive moving image content.

To solve this, in the method for generating a video according to the embodiment, the moving image content is captured in the virtual space Sv, thereby facilitating the generation of the moving image content.

A display device 50 illustrated in FIG. 1 is a head mount display (hereinafter, also referred to as an HMD), and provides the virtual space Sv to a user (creator) by displaying a video generated by the video generation apparatus 1 to be described later.

The controller 60 illustrated in FIG. 1 is a remote operation device by which a user performs, in the real world Sr, various types of operation on the virtual camera 10 in the virtual space Sv. For example, in the method for generating a video according to the embodiment, the virtual camera 10 in the virtual space Sv can be moved in accordance with the trajectory of the controller 60 in the real world Sr, or the orientation (camera angle) of the virtual camera 10 can be changed in accordance with the inclination of the controller 60.

For example, the user moves the virtual camera 10 using the controller 60 while visually recognizing the virtual space Sv displayed on the display device 50, thereby creating a camera viewpoint video in which a three-dimensional object 100 present in the virtual space Sv is shot by the virtual camera 10. Note that the video of the virtual space Sv seen from the user is 3D, whereas the virtual viewpoint video is 2D.

At this time, as described above, if the user confirms the camera viewpoint video and the camerawork every time the camera viewpoint video is captured, a lot of time may be spent on the work, leading to a decrease in work efficiency.

Therefore, in the method for generating a video according to the embodiment, the virtual screen for displaying the camera viewpoint video is disposed in the virtual space Sv, and the camera trajectory of the virtual camera 10 is displayed in the virtual space Sv.

That is, in the method for generating a video according to the embodiment, the camera viewpoint video and the camera trajectory during shooting are displayed on the display device 50. This enables the user to confirm the camera viewpoint video and the camera trajectory (camerawork) in parallel with the shooting of the camera viewpoint video.

The example illustrated in FIG. 2 illustrates a case where a virtual screen Sc1 is set up on the display screen of the display device 50, the current camera viewpoint video is displayed on the virtual screen Sc1, and a camera trajectory T is displayed in the virtual space Sv seen from the user.

The virtual screen Sc1 is, for example, a screen that moves following the posture of the user, and is always disposed at a position facing the user. As illustrated in FIG. 2, the virtual screen Sc1 and the camera viewpoint video displayed on the virtual screen Sc1 are images having transparency. This enables the user to visually recognize the inside of the virtual space Sv while confirming the virtual camera video displayed on the virtual screen Sc1.

As indicated by dashed lines in FIG. 2, a virtual screen Sc2 may also be set on the outer wall of the virtual space Sv. In this case, the user sees the virtual screen Sc2 as part of the virtual space Sv.

The camera trajectory T is a line indicating the trajectory of the virtual camera 10. Therefore, the user can confirm the camerawork of the virtual camera 10 using the camera trajectory T. In the example of FIG. 2, an icon A is displayed on the camera trajectory T. As will be described later, the icon A indicates a point where a key frame to be key is imaged at the time of capturing the virtual camera video.

For example, the user can set a key frame by operating buttons of the controller 60. When the key frame is set, the icon A is added to the camera trajectory T. Although the example of FIG. 2 illustrates a case where the icon A is a rhombic model, the icon A may be one displaying a reduced key frame, or one suggesting the orientation of the virtual camera 10 at the time of capturing the key frame.

When the user selects the icon A, a virtual camera image corresponding to the selected icon A can also be displayed on the virtual screen Sc1, for example. That is, by displaying the icon A together with the camera trajectory T, the set key frame can be easily grasped.

As described above, in the method for generating a video according to the embodiment, the current virtual camera video and the camera trajectory T are displayed. In this way, when creating a camera video, the user can check the current virtual camera video and the camera trajectory T in parallel.

In addition, in the method for generating a video according to the embodiment, since the virtual camera video is captured in the virtual space Sv, the moving image content can be easily generated if there is data of the three-dimensional object 100.

Therefore, according to the method for generating a video of the embodiment, generation of moving image content can be facilitated. Note that, in the example of FIG. 2, the case where the virtual camera video and the camera trajectory T are displayed on the display device 50 has been described, but the present disclosure is not limited thereto. The virtual camera video and the camera trajectory T may be displayed on separate display devices, or either one or both of the virtual camera video and the camera trajectory T may be set to be hidden.

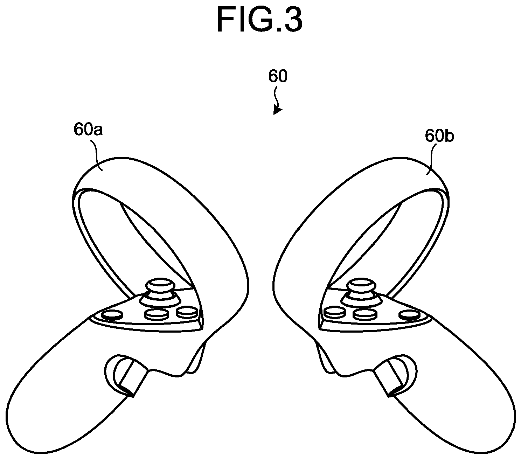

Next, the controller 60 according to the embodiment will be described with reference to FIG. 3. FIG. 3 is a diagram illustrating an example of an external appearance of the controller 60 according to the embodiment. In the example illustrated in FIG. 3, the controller 60 includes a left controller 60a and a right controller 60b.

In the example illustrated in FIG. 3, the left controller 60a and the right controller 60b are each provided with a plurality of buttons. A command is associated with each of the plurality of buttons, and by pressing each button, the user can instruct the corresponding command with respect to the video generation apparatus.

For example, the left controller 60a can input various commands such as adjustment of a playback time period and playback speed, change of a scale of a user viewpoint video, setting and cancellation of a point of interest to be described later, and change of a user position in the virtual space Sv.

Further, the right controller 60b can input various commands such as movement of the virtual camera 10, setting of a camera angle of the virtual camera 10, change of a gaze position in the user viewpoint video, and setting of a key frame. Furthermore, for example, the scale of the virtual camera video can be changed by simultaneously operating the left controller 60a and the right controller 60b.

Note that the controller 60 illustrated in FIG. 3 is an example, and the present disclosure is not limited thereto. Instead of the controller 60, the video generation apparatus may receive gesture operation of the user as user operation, for example. Hereinafter, when the left controller 60a and the right controller 60b are not distinguished from each other, they are simply referred to as "controller 60".

Next, a configuration example of the video generation apparatus according to the embodiment will be described with reference to FIG. 4. FIG. 4 is a block diagram of a video generation apparatus according to the embodiment. FIG. 4 illustrates the display device 50 and the controller 60 in addition to the video generation apparatus 1.

First, the controller 60 will be described. In the example illustrated in FIG. 4, the controller 60 includes a gyro sensor 61, an acceleration sensor 62, and operation buttons 63. The gyro sensor 61 is a sensor that detects angular velocities of three axes that detect the movement of the controller 60. For example, the gyro sensor 61 is built in the left controller 60a and the right controller 60b.

For example, the user can change the user viewpoint set in the virtual space Sv by an act of moving or the like of the left controller 60a, and can move the virtual camera 10 in the virtual space Sv by an act of moving or the like of the right controller 60b.

The acceleration sensor 62 is a sensor that detects acceleration generated in the controller 60. The operation buttons 63 are a plurality of buttons mounted on the controller 60, and various commands are associated with each of the plurality of buttons.

Next, the display device 50 will be described. In the example illustrated in FIG. 4, the display device 50 includes a display unit 51, a gyro sensor 52, an acceleration sensor 53, a camera 54, and a speaker 55.

As described above, since the display device 50 is an HMD, the display unit 51 is disposed in front of the user when the user wears the HMD. The display unit 51 may be configured by a light-shielding display surface or may be configured by a light-transmissive display surface. That is, the display device 50 is VR goggles, but may be AR goggles. Furthermore, it goes without saying that the display device 50 is not limited to the HMD.

The gyro sensor 52 and the acceleration sensor 53 are sensors that detect movement of the display device 50 and acceleration generated in the display device 50, respectively. Since the display device 50 is an HMD, the gyro sensor 52 and the acceleration sensor 53 detect a change in the posture of the user wearing the display device 50.

The camera 54 is, for example, a camera that images the front view field of the display device 50, in other words, a camera that images the real world Sr seen from the user. Speaker 55 outputs sound on the basis of the audio signal output from the video generation apparatus 1.

Next, the video generation apparatus 1 will be described. As illustrated in FIG. 4, the video generation apparatus 1 includes a storage unit 2 and a control unit 3. The video generation apparatus 1 may include a communication unit (not illustrated) for performing wireless or wired communication with an external device, and an operation unit (not illustrated) for receiving operation of a user.

The storage unit 2 is implemented by, for example, a semiconductor memory element such as a RAM or a flash memory, or a storage device such as a hard disk or an optical disk. In the example illustrated in FIG. 4, the storage unit 2 stores three-dimensional video information 20, key frame information 21, and virtual camera video information 22.

The three-dimensional video information 20 is three-dimensional video content that is a source of the virtual camera video, and is information about the video played back in the virtual space Sv. The three-dimensional video information 20 includes information about a moving image of the three-dimensional object 100, information about a three-dimensional background moving image serving as a background of the three-dimensional object 100, and the like.

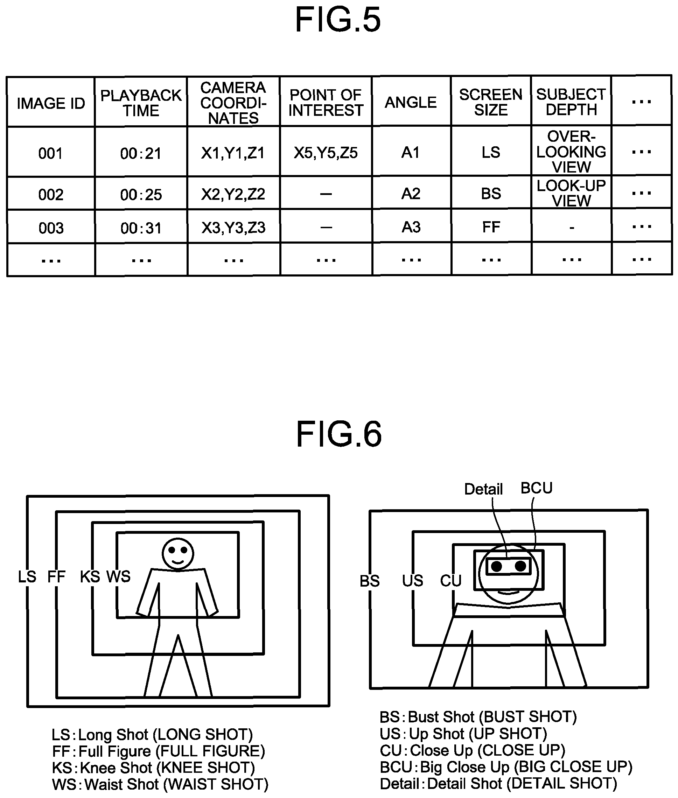

The key frame information 21 is information about a frame (image) to be key in the virtual camera video. Here, an example of the key frame information 21 will be described with reference to FIG. 5. FIG. 5 is a diagram illustrating an example of the key frame information 21 according to the embodiment.

In the example illustrated in FIG. 5, the key frame information 21 is information in which "image ID", "playback time", "camera coordinates", "point of interest", "angle", "screen size", "subject depth", and the like are associated with each other.

"Image ID" indicates an identifier for identifying a key frame. "Playback time" indicates the time of playing back the three-dimensional object 100. "Camera coordinates" indicate coordinates of the virtual camera 10 in the virtual space Sv at the time of imaging the key frame.

"Point of interest" indicates a point of interest set in the virtual space Sv. As will be described later, in a case where the point of interest is set up, the posture of the virtual camera 10 is controlled such that the center of the angle of view of the virtual camera 10 is directed to the point of interest.

"Angle" indicates the camera angle of the virtual camera 10 at the time of imaging the key frame, that is, the angle of view of the virtual camera 10. "Screen size" indicates the size of the three-dimensional object 100 displayed in the key frame. A specific example of the screen size will be described later with reference to FIG. 6.

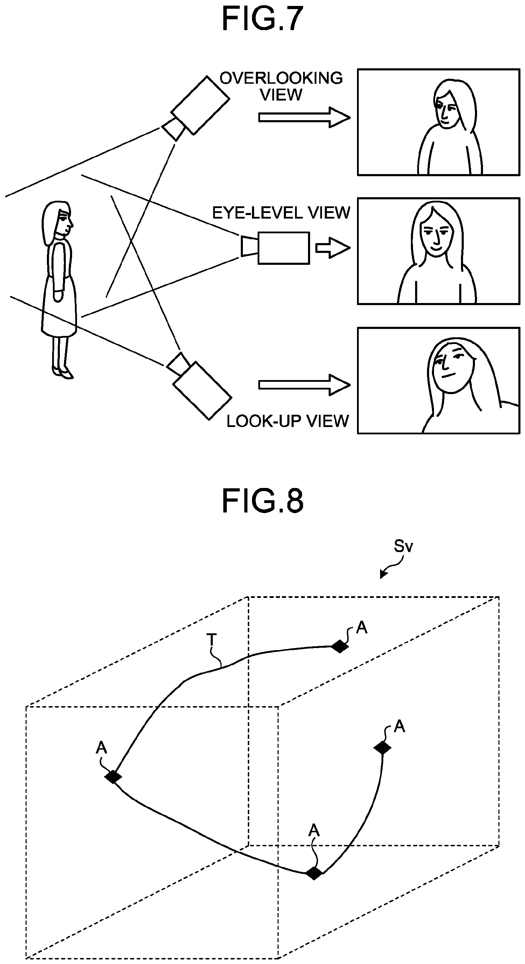

"Subject depth" indicates a camera angle with respect to the three-dimensional object 100. A specific example of the subject depth will be described later with reference to FIG. 7. Note that the key frame information 21 illustrated in FIG. 5 is an example, and the present disclosure is not limited thereto.

Next, "screen size" and "subject depth" will be described with reference to FIGS. 6 and 7. FIG. 6 is explanatory diagrams of screen sizes. FIG. 7 is an explanatory diagram of subject depths. As illustrated in the left diagram of FIG. 6, in the case of a cut obtained by shooting the entire body of the subject, the screen size is roughly classified into a long shot (LS), a full figure (FF), a knee shot (KS), and a waist shot (WS).

Further, as illustrated in the right diagram of FIG. 6, in the case of a cut obtained by shooting the upper body of the subject, the screen size is roughly classified into a bust shot (BS), an up shot (US), a close up (CU), a big close up (BCU), and a detail shot (Detail).

As illustrated in FIG. 7, the subject depth is roughly classified into "overlooking view", "eye-level view", and "look-up view". For example, the overlooking view indicates a cut obtained by shooting the face of the subject in an overlooking manner from above, and the eye-level view indicates a cut obtained by shooting the subject from the height of the eyes of the subject. The look-up view indicates a cut obtained by shooting the face of the subject from below.

The video generation apparatus 1 associates the screen size and the subject depth as metadata with the key frames in accordance with the size of the three-dimensional object 100 displayed in the key frame, the imaging direction with respect to the three-dimensional object 100, and the like.

An auxiliary line indicating the screen size may be displayed in the virtual space Sv, for example. Furthermore, a command for designating the screen size may be set in advance, for example, and when the user selects a command, the virtual camera 10 may be moved to shoot the three-dimensional object 100 with the screen size corresponding to the command, or the zoom ratio of the virtual camera 10 may be changed.

Returning to the description of FIG. 4, the virtual camera video information 22 will be described. The virtual camera video information 22 is information about a virtual camera video virtually captured by the virtual camera 10. In this case, the virtual camera video information 22 is, for example, information about the virtual camera video in a state where the auxiliary image for capturing the virtual camera video, such as the virtual screen Sc2 (see FIG. 1), is deleted.

Next, the control unit 3 will be described. The control unit 3 is, for example, implemented by executing a program stored in the inside of video generation apparatus 1 using a random access memory (RAM) or the like as a work area by a central processing unit (CPU), a micro processing unit (MPU), or the like. Furthermore, the control unit 3 is a controller, and may be implemented by, for example, an integrated circuit such as an application specific integrated circuit (ASIC) or a field programmable gate array (FPGA).

As illustrated in FIG. 4, the control unit 3 includes a reception unit 30, a detection unit 31, a first generation unit 32, a second generation unit 33, a setting unit 34, a display control unit 35, and a correction unit 36, and implements or executes the functions and the operation of the information processing described below. Note that the internal configuration of the control unit 3 is not limited to the configuration illustrated in FIG. 4, and may be another configuration as long as the information processing to be described later is performed. The control unit 3 may be connected to a predetermined network in a wired or wireless manner using, for example, a network interface card (NIC) or the like, and receive various types of information from an external server or the like via the network.

The reception unit 30 receives user operation. Specifically, various types of operation on the controller 60 by the user are received as user operation. The reception unit 30 receives a posture signal related to the posture of the controller 60 from the gyro sensor 61 and the acceleration sensor 62 of the controller 60, and receives a command from the operation buttons 63 of the controller 60. In addition, the reception unit 30 receives the posture signal of the display device 50 from the gyro sensor 52 and the acceleration sensor 53 of the display device 50.

Detection unit 31 detects respective postures of the controller 60 and the display device 50. Specifically, the detection unit 31 detects the posture of controller 60 on the basis of the posture signal of the controller 60, and detects the posture of display device 50, that is, the posture of the user on the basis of the posture signal of display device 50.

The first generation unit 32 moves the virtual camera 10 in the virtual space Sv on the basis of the user operation received by the reception unit 30, thereby generating a camera viewpoint video obtained by shooting the three-dimensional object 100 in the virtual space Sv using the virtual camera 10.

Specifically, the first generation unit 32 moves the virtual camera 10 in the virtual space Sv in accordance with the posture signal of the controller 60, thereby generating a virtual camera video obtained by shooting the inside of the virtual space Sv using the virtual camera 10.

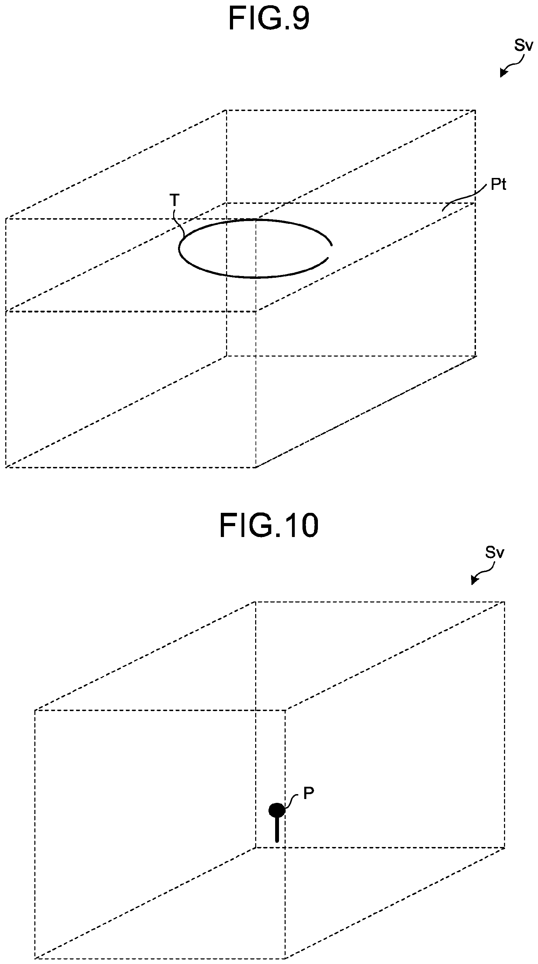

Here, a specific example of processing by the first generation unit 32 will be described with reference to FIGS. 8 to 12. FIGS. 8 and 9 are diagrams illustrating an example of the camera trajectory T according to the first embodiment. In the example illustrated in FIG. 8, the camera trajectory T, which is a trajectory of the virtual camera 10, is drawn on the basis of movement operation of moving the controller 60 in the real world Sr of the user.

That is, the virtual camera 10 moves in the virtual space Sv in accordance with the trajectory drawn by the user using the controller 60, whereby the camera trajectory T is drawn. When the virtual camera 10 is moved along the camera trajectory T, the first generation unit 32 generates a video in the virtual space Sv seen from the virtual camera 10 as a virtual camera video.

At this time, the first generation unit 32 determines the inclination of the virtual camera 10 in accordance with the inclination of the controller 60. That is, the user can change the position of the virtual camera 10 by moving the controller 60 (right controller 60b), and can change the inclination of the virtual camera 10 by changing the inclination of the controller 60.

In addition, as illustrated in FIG. 9, the video generation apparatus 1 according to the embodiment has a fixed mode for fixing the height of the virtual camera 10. In the fixed mode, for example, the virtual camera 10 moves in the virtual space Sv in accordance with the trajectory of the controller 60 in a state where the height of the virtual camera 10 is fixed. That is, in the fixed mode, the movement in the roll direction by the virtual camera 10 is prohibited.

Therefore, the virtual camera 10 moves on a virtual plane Pt having the same height in the virtual space Sv, and the camera trajectory T is drawn on the virtual plane Pt. That is, in the fixed mode, by disabling the movement of the controller 60 in the vertical direction, the user can produce a virtual camera video without worrying about the shake of the controller 60 in the vertical direction.

Note that the case where the height is fixed in the fixed mode has been described here. However, the present disclosure is not limited thereto, and the pitch and the yaw of the virtual camera 10 may be fixed.

Next, a point of interest will be described with reference to FIG. 10. FIG. 10 is a diagram illustrating an example of the point of interest according to the embodiment. As illustrated in FIG. 10, the user can set a point of interest P in the virtual space Sv.

More specifically, the user calls a setting command for setting the point of interest P using, for example, the left controller 60a (see FIG. 3), and can set the point of interest P at a discretionary position in the virtual space Sv by, for example, moving the left controller 60a.

When the point of interest P is set, the first generation unit 32 controls the posture of the virtual camera 10 such that the center of the angle of view of the virtual camera 10 is directed to the point of interest P, and moves the virtual camera 10 in accordance with the trajectory of the controller 60, thereby generating the virtual camera video.

That is, in this case, the user can obtain the virtual camera video in which the point of interest P is shot at all times by setting the point of interest P. In this case, the user can also set the camera trajectory T without worrying about the orientation of the virtual camera 10 (i.e., the inclination of the controller 60).

Furthermore, a prohibited area in which entry of the virtual camera 10 is prohibited may be provided. Regarding the prohibited area, entry of the virtual camera 10 may be prohibited, or a warning image may be displayed when the virtual camera 10 enters the prohibited area.

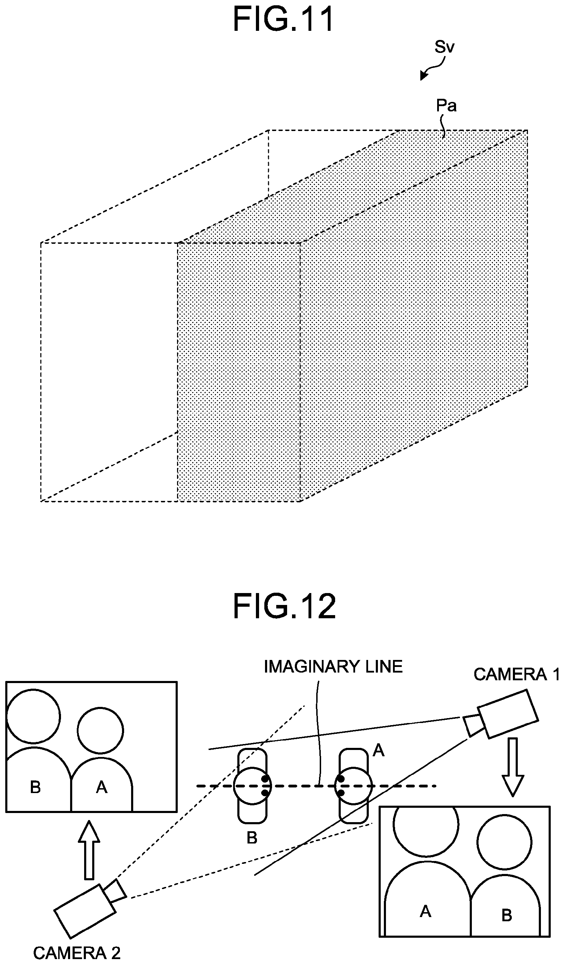

FIG. 11 is a diagram illustrating an example of the prohibited area. The example illustrated in FIG. 11 illustrates a case where a prohibited area Pa is the right half of the virtual space Sv. Therefore, in the example illustrated in FIG. 11, the virtual camera 10 moves in the left half area in the virtual space Sv.

Examples of the reason for providing the prohibited area Pa in this manner include an imaginary line. FIG. 12 is an explanatory diagram of the imaginary line. As illustrated in FIG. 12, for example, in a scene where A and B face each other, the placement of A and B is reversed in an image captured from a camera 1 behind A and an image captured from a camera 2 behind B.

Therefore, for example, when the image captured using the camera 1 is switched to the image captured using the camera 2, it becomes difficult for the viewer to instantaneously grasp the situation. For this reason, a line segment connecting A and B is set as an imaginary line. The imaginary line may also be referred to as a fictitious line.

In the example illustrated in FIG. 11, the prohibited area Pa is set so as to prevent cameras from passing through the imaginary line. In this way, it is possible to generate a virtual camera video that can be easily understood by the viewer.

The prohibited area Pa may be set on the control unit 3 side or may be set on the user side. Further, the prohibited area Pa may be dynamically set in consideration of the current position of the virtual camera 10, and the like. Furthermore, the prohibited area Pa may be set in advance at the time of creating the three-dimensional object 100.

Returning to the description of FIG. 4, the second generation unit 33 will be described. The second generation unit 33 generates a user viewpoint video of viewing the inside of the virtual space Sv from the user viewpoint set in the virtual space Sv. Specifically, the second generation unit 33 generates the user viewpoint video by moving the user viewpoint in the virtual space Sv in accordance with the posture signal of the display device 50 and connecting, at all times, the images in the virtual space Sv seen from the user viewpoint.

At this time, the reception unit 30 can receive various commands such as the change of the scale of the virtual space Sv and the rotation of the virtual space Sv, and the second generation unit 33 generates the user viewpoint video reflecting the command received by the reception unit 30.

For example, when changing the scale of the virtual space Sv, the user can set one of the life-size mode and the miniature mode as the default. Here, the life-size mode is a mode in which the inside of the virtual space Sv is displayed in an actual size. By setting the life-size mode, the user can view the user viewpoint video that makes the user feel as if the user exists in the virtual space Sv.

The miniature mode is a mode in which the entire virtual space Sv is displayed in a reduced manner. By setting the miniature mode, the user can view the user viewpoint video that enables the user to view the inside of the virtual space Sv in an overlooking manner.

The reception unit 30 can also receive user operation of finely adjusting the reduction ratio of the virtual space Sv, and the second generation unit 33 can also generate the user viewpoint video in which the reduction ratio is finely adjusted in accordance with the user operation received by the reception unit 30.

Furthermore, the second generation unit 33 can also generate a user viewpoint video in which the user viewpoint is moved along the camera trajectory T of the virtual camera 10. In such a user viewpoint video, the user can view the inside of the virtual space Sv seen from the virtual camera 10.

The setting unit 34 sets each key frame on the basis of the user operation received by the reception unit 30. When setting a key frame, the setting unit 34 adds information about the key frame to the key frame information 21.

The display control unit 35 disposes, in the virtual space Sv, the virtual screens Sc1 and Sc2 for displaying the camera viewpoint video generated by the first generation unit 32, and displays the camera trajectory T of the virtual camera 10 in the virtual space Sv.

That is, the display control unit 35 sets the virtual screens Sc1 and Sc2 in the user viewpoint video generated by the second generation unit 33, and displays, on the virtual screens Sc1 and Sc2, the virtual camera video generated by the first generation unit 32.

Furthermore, the display control unit 35 displays the camera trajectory T in the user viewpoint video by superimposing the camera trajectory T in the user viewpoint video. When a key frame is set, the display control unit 35 displays the icon A at the position where the key frame is captured.

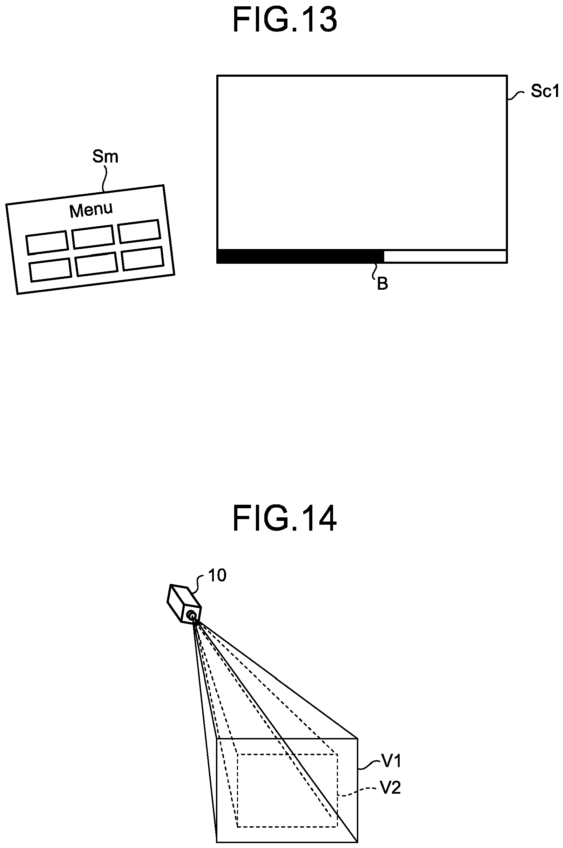

The display control unit 35 can also display an auxiliary image for assisting capturing of the virtual camera video in the user viewpoint video or in the virtual screen Sc. Here, a specific example of the auxiliary image will be described with reference to FIGS. 13 to 15.

FIGS. 13 to 15 are diagrams illustrating examples of the auxiliary image according to the embodiment. In FIG. 13, the virtual screen Sc1 is illustrated in addition to a menu screen Sm that is the auxiliary image. As illustrated in FIG. 13, the display control unit 35 displays a menu screen in the user viewpoint video when the user performs predetermined operation.

In the example illustrated in FIG. 13, a case where six buttons each associated with a different command are displayed on the menu screen Sm is illustrated. Furthermore, as illustrated in FIG. 13, the virtual screen Sc1 is displayed at a position facing the user, whereas the menu screen is displayed at the lower left with respect to the virtual screen Sc1.

This is because various types of operation on the menu screen Sm are assumed to be performed by the left controller 60a (see FIG. 3). More specifically, the user can input a command by touching each button of the menu screen disposed in the virtual space Sv using the left controller 60a in the real world Sr.

That is, by displaying the menu screen at a position where the left controller 60a can be easily operated, command input from the menu screen by the user can be facilitated.

In addition, as illustrated in FIG. 13, a seek bar B indicating a playback position of the camera viewpoint video is displayed on the virtual screen Sc1. In this way, the user can easily grasp the current playback position (playback time) using the seek bar B.

The video generation apparatus 1 can also receive user operation on the seek bar B, and can change the playback position as well in accordance with the user operation. Here, the user operation on the seek bar B can be performed by operating an operation button of the left controller 60a.

Changing the playback position includes displaying the virtual camera video at the playback time selected by the user and sequentially displaying the key frames in accordance with the user operation. That is, the user can change a playback position to that corresponding to the playback time desired by the user or sequentially check the set key frames.

As illustrated in FIG. 14, the auxiliary image may include the virtual camera 10 and angle-of-view images V1 and V2 indicating the current angle of view of the virtual camera 10. For example, the display control unit 35 disposes the virtual camera 10 at a position set in the virtual space Sv, and superimposes the virtual camera 10 on the user viewpoint image when the user viewpoint video includes the virtual camera 10.

At this time, the display control unit 35 displays the virtual camera 10 on the user viewpoint video in consideration of the orientation of the virtual camera 10 in the virtual space Sv, and displays the angle-of-view images V1 and V2 in accordance with the current angle of view.

Although two types of the angle-of-view images V1 and V2 are illustrated in the example of FIG. 14, the angle-of-view image can be appropriately changed in accordance with the actual angle of view of the virtual camera 10 in the virtual space Sv.

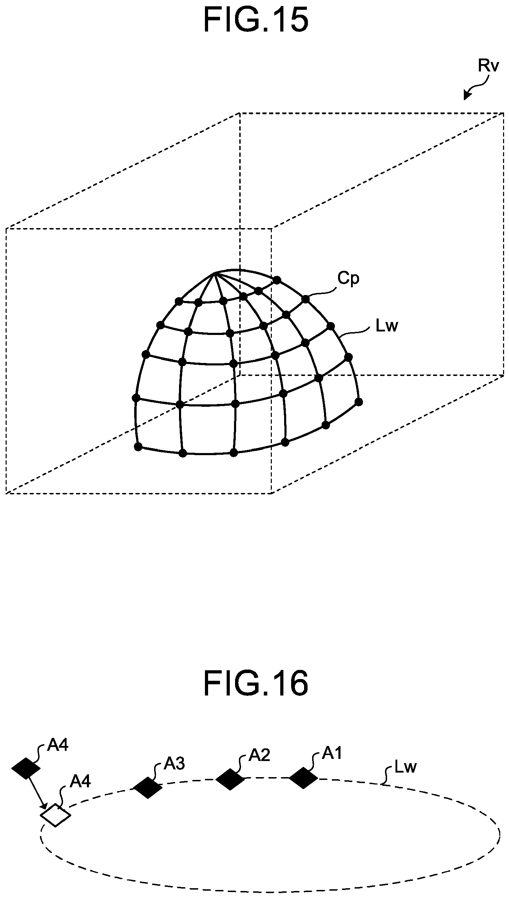

The example of FIG. 15 illustrates a case where the auxiliary image is guide lines Lw. The guide line Lw is a line that assists the trajectory of the virtual camera 10, and the user can draw the ideal camera trajectory T by moving the virtual camera 10 along the guide line Lw.

Note that the example of FIG. 15 illustrates a case where the guide lines Lw include concentric circles formed along the contour of the hemisphere and ridge lines intersecting the concentric circle. Here, an intersection point Cp between the concentric circle and the ridge line serves as an index at the time of setting a key frame when the virtual camera 10 is moved along the guide line Lw.

That is, when moving the virtual camera 10 along the guide line Lw, the user can set the final camera trajectory T along the guide line Lw by setting a key frame on the intersection point Cp. Note that the guide lines Lw illustrated in FIG. 15 are an example, and the present disclosure is not limited thereto. For example, the guide lines Lw may include a straight line. In addition, the concentric circles of the guide lines Lw may be expanded, or the shapes thereof may be optionally changed by user operation.

Returning to the description of FIG. 4, the correction unit 36 will be described. The correction unit 36 corrects the camera trajectory T on the basis of the key frame set by the user operation. When the camera trajectory T is corrected by the correction unit 36, the first generation unit 32 regenerates the virtual camera viewpoint video on the basis of the corrected camera trajectory T.

The virtual camera video regenerated by the first generation unit 32 is displayed, for example, on the virtual screen Sc1. In this way, the user can confirm the virtual camera video edited by the video generation apparatus 1. In addition, the user can save the virtual camera video by performing a predetermined operation, and the saved virtual camera video is saved in the storage unit 2 as the virtual camera video information 22.

Specifically, the correction unit 36 corrects the camera trajectory T by smoothly connecting imaging coordinates of consecutive key frames in a time series. That is, in this case, when the user sets the key frame, the camera viewpoint video in which the camera trajectory T is corrected can be obtained. In other words, shake or the like of the camera trajectory T based on the user operation is automatically corrected in this case.

Furthermore, when a key frame is added or deleted by user operation, the correction unit 36 corrects the camera trajectory T on the basis of the added or deleted key frame. Note that the addition of a key frame here indicates that a new key frame has been inserted between instances of playback time of consecutive key frames.

The correction unit 36 sets, as a new camera trajectory, a line smoothly connecting the imaging position of the added key frame and the imaging positions of the key frames before and after the added key frame in a time series. Furthermore, when the key frame is deleted, the correction unit 36 sets, as a new camera trajectory, a trajectory smoothly connecting the key frames before and after the deleted key frame.

In addition, the correction unit 36 corrects the camera trajectory T on the basis of the time-series change related to the consecutive key frames. Here, the time-series change related to key frames refers to a time interval between key frames and a distance interval between imaging positions of key frames.

When the user performs predetermined operation at the time of editing the virtual camera video by the user, the correction unit 36 corrects the imaging positions of one or a plurality of key frames such that the time intervals of the key frames are equal to each other. That is, in this case, the correction unit 36 sets, as key frames, the virtual camera videos at the instances of shooting time at which the time intervals are equal to each other in the corrected camera trajectory T.

Similarly, when the user performs predetermined operation at the time of editing the virtual camera video by the user, the correction unit 36 corrects the imaging positions of one or a plurality of key frames such that the distance intervals between the imaging positions of the key frames are equal to each other. That is, in this case, the correction unit 36 sets, as key frames, the virtual camera videos at the instances of shooting time at which the distance intervals of the imaging positions are equal to each other in the corrected camera trajectory T. As described above, the correction unit 36 can facilitate editing of the virtual camera video by the user by correcting the key frame.

In addition, the correction unit 36 may correct the camera trajectory T by, for example, correcting the imaging position of the key frame on the basis of the guide lines Lw illustrated in FIG. 15. Here, an example of processing by the correction unit 36 will be described with reference to FIGS. 15 to 17. Note that, in the following description, it is assumed that the imaging position of the key frame is indicated by the corresponding icon A, and the number attached to the end of the icon A indicates the order of imaging the key frame.

The example of FIG. 15 illustrates a case where, for example, the key frames corresponding to icons A1 to A3 are set along the guide line Lw, and the key frame corresponding to an icon A4 deviate from the guide line Lw.

In this case, the correction unit 36 corrects the imaging position of the key frame such that the icon A4 is set on the guide line Lw. That is, in this case, the camera trajectory T is corrected as if all the key frames were captured along the guide line Lw.

In this manner, by correcting the camera trajectory T along the guide line Lw, a virtual camera video can be generated using the camera trajectory T suitable for shooting the three-dimensional object 100. In this case, the correction unit 36 may correct the imaging position of the key frame such that the icon A is on the intersection point Cp illustrated in FIG. 15.

Furthermore, in a case where the above correction is performed in mind, when the user sets a key frame, the correction unit 36 may correct the position of the virtual camera 10 such that the key frame is captured on the intersection point Cp closest to the current virtual camera 10. That is, in this case, the virtual camera 10 moves as if the virtual camera 10 is attracted to the intersection point Cp. Note that the correction unit 36 may perform the above processing on not only the intersection point Cp but also the guide line Lw.

As described above, when the camera trajectory T is corrected on the basis of the key frame, a case where the corrected camera trajectory T differs from the camerawork intended by the user is also assumed. For this reason, the correction unit 36 may correct the camera trajectory T on the basis of the trajectory drawn by the user operation.

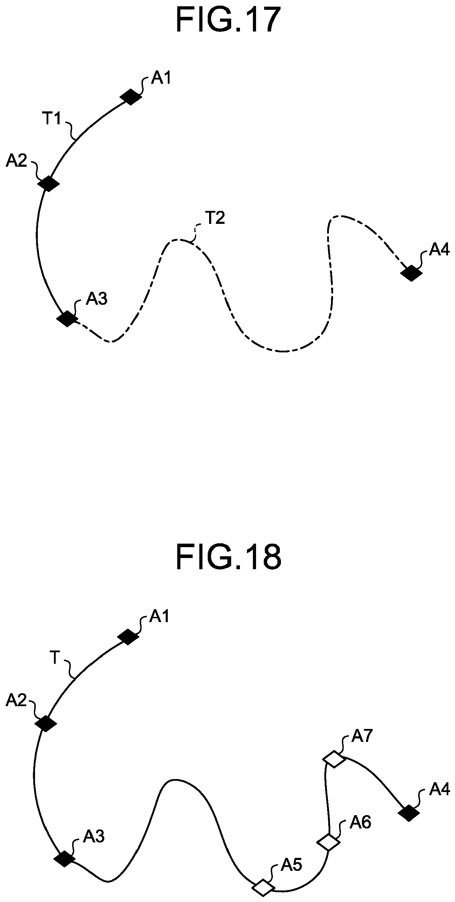

Specifically, the example illustrated in FIG. 17 illustrates a case where a camera trajectory T1 from the icons A1 to A3 is the camera trajectory T corrected by the correction unit 36 through the processing described above, and where a camera trajectory T2 from the icon A3 to the icon A4 is the camera trajectory drawn by the user operation.

The user draws a trajectory with the right controller 60b similarly as when capturing the virtual camera video, thereby setting the camera trajectory T2 on the basis of the trajectory. That is, in this case, since the user can set the camera trajectory T2 freehand, the camerawork in the virtual viewpoint video can be extended limitlessly. The camera trajectory T2 can also be provided by setting key frames at extremely short intervals by the user.

As illustrated in FIG. 18, the correction unit 36 may automatically add a key frame from the virtual camera video. The example of FIG. 18 illustrates a scene in which key frames corresponding to the icons A1 to A4 have already been set.

For example, in this case, the correction unit 36 extracts a recommended image from the virtual camera video based on the camera trajectory T before correction, and sets the recommended image as a key frame. The recommended image is extracted by using a predetermined image analysis algorithm. The user may set in advance a condition under which the recommended image is extracted.

The example illustrated in FIG. 18 illustrates a scene in which three images corresponding to icons A5 to A7 are newly added as key frames. When the key frames are added, the correction unit 36 corrects the camera trajectory T in a time-series order of key frames.

That is, in this case, since the camera trajectory T including the key frames added by the automatic extraction is generated, the virtual camera video captured by employing the appropriate camerawork can be obtained without setting the key frame by the user.

In addition, the correction unit 36 can also change the illumination mode for the three-dimensional object 100 in accordance with user operation. Here, the illumination mode includes an illumination position with respect to the three-dimensional object 100, a range to be illuminated, a color temperature of the illumination, and the like. In this way, by changing the illumination mode, various renderings by illumination can be achieved.

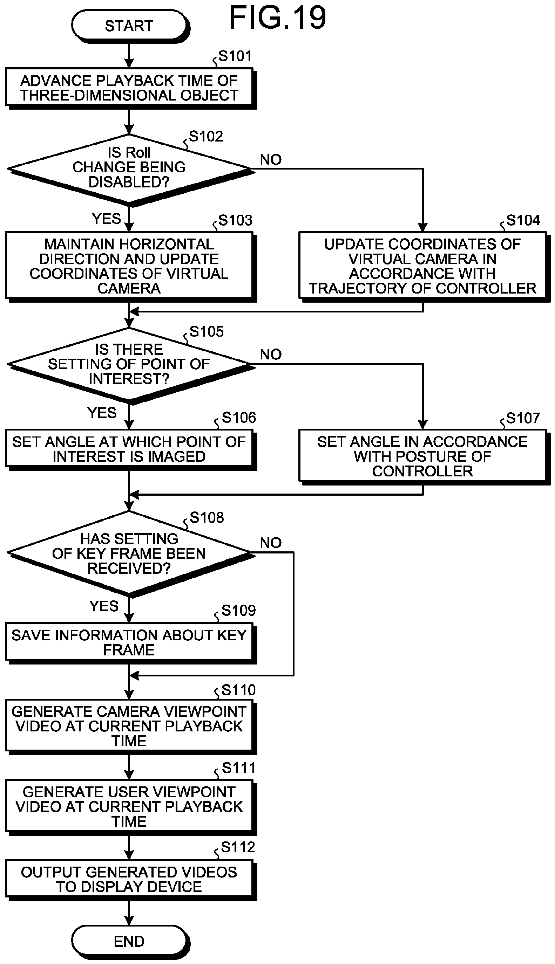

Next, a processing procedure executed by the video generation apparatus 1 according to the embodiment will be described with reference to FIG. 19. FIG. 19 is a flowchart illustrating a processing procedure executed by the video generation apparatus 1 according to the embodiment. Note that the following processing procedure is repeatedly executed by the control unit 3 at the time of generating the virtual camera video.

As illustrated in FIG. 19, first, the video generation apparatus 1 advances the playback time of the three-dimensional object 100 including the virtual space Sv (Step S101). Then, the video generation apparatus 1 determines whether or not the roll change is being disabled (Step S102). Note that the processing of Step S102 is the processing of determining whether the fixed mode described with reference to FIG. 9 is applied.

When determining that the roll change is being disabled in the determination of Step S102 (Step S102, Yes), the video generation apparatus 1 maintains the horizontal direction and updates the coordinates of the virtual camera 10 in the virtual space Sv in accordance with the user operation (Step S103). When the roll change is enabled in the determination of Step S102 (Step S102, No), the video generation apparatus 1 updates the coordinates of the virtual camera 10 in accordance with the trajectory of the controller 60 (Step S104).

Subsequently, the video generation apparatus 1 determines whether or not the point of interest P is set (Step S105). When the point of interest P is set (Step S105, Yes), the video generation apparatus 1 sets the angle of the virtual camera 10 as the angle at which the point of interest P is shot (Step S106).

When the point of interest P is not set in the determination of Step S105 (Step S105, No), the video generation apparatus 1 sets the angle of the virtual camera 10 in accordance with the posture of the controller 60 (Step S107).

Then, the video generation apparatus 1 determines whether or not setting of a key frame has been received (Step S108). When setup of a key frame has been received (Step S108, Yes), the video generation apparatus 1 saves information about the key frame (Step S109). When the setting of the key frame has not been received in the determination of Step S108 (Step S108, No), the processing of Step S109 is omitted.

Subsequently, the video generation apparatus 1 generates the camera viewpoint video at the current playback time on the basis of the processing results of Steps S101 to S107 (Step S110), and generates the user viewpoint video at the current playback time (Step S111). Note that, at this time, the user viewpoint video includes the camera trajectory T.

Thereafter, the video generation apparatus 1 outputs the videos generated in Steps S110 and S111 to the display device 50 (Step S112), and ends the processing.

### <Second Embodiment>

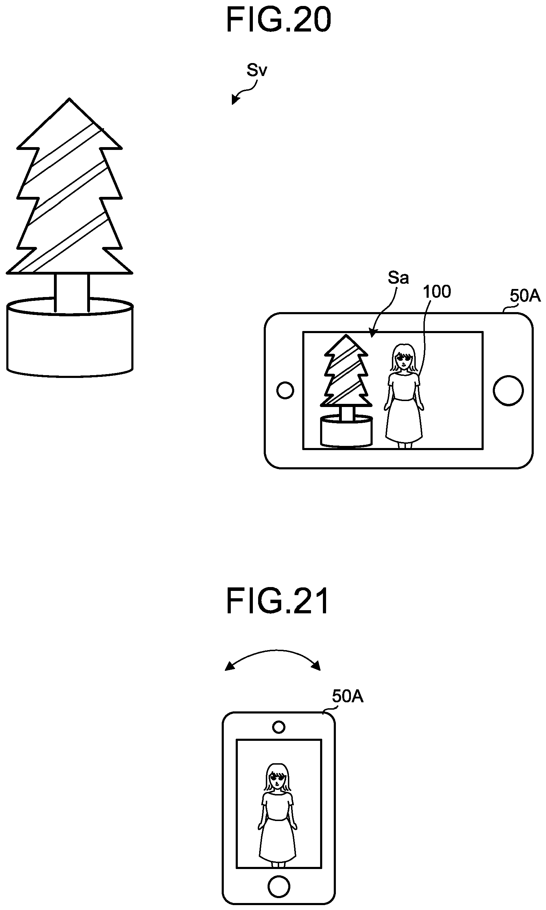

Next, an outline of a method for generating a video according to a second embodiment will be described with reference to FIGS. 20 and 21. FIG. 20 is a diagram illustrating an outline of a method for generating a video according to the second embodiment. FIG. 21 is a diagram illustrating an example of a display device according to the second embodiment.

The first embodiment and the second embodiment differ in that the virtual space Sv is VR space in the first embodiment, whereas the virtual space Sv is AR space in the second embodiment.

In the example illustrated in FIG. 20, a display device 50A is a smartphone. The display device 50A is not limited to a smartphone, and may be another device as long as the device has a camera function capable of shooting the real world Sr. Furthermore, it goes without saying that the display device 50A may be Ar goggles.

As illustrated in FIG. 20, for example, when the user shoots the real world Sr with the display device 50A, the display device 50A displays virtual space Sa as if a three-dimensional object 100 virtually localized in the real world Sr exists in the real world Sr.

As illustrated in FIG. 21, for example, the user moves the display device 50A to update the display position of the three-dimensional object 100 in accordance with the angle of view of the real world Sr shot by the display device 50A. That is, in this case, the display device 50A functions as both the display device 50 and the controller 60 in the first embodiment.

In addition, for example, the user can set the above-described key frame by operating the display device 50A, or can cause the display device 50A to display the key frame. Further, the user can adjust the angle of view or the like of the key frame by changing the inclination of the display device 50A.

As described above, in the method for generating a video according to the second embodiment, a device such as a smartphone that is more widespread than the HMD is used as the display device 50A. In this way, various users can easily create the camera viewpoint video. Furthermore, in the second embodiment, since the background of the virtual space Sa is the real world Sr, a virtual viewpoint video with a background set at a favorite place of the user can be created as long as data of the three-dimensional object 100 is provided.

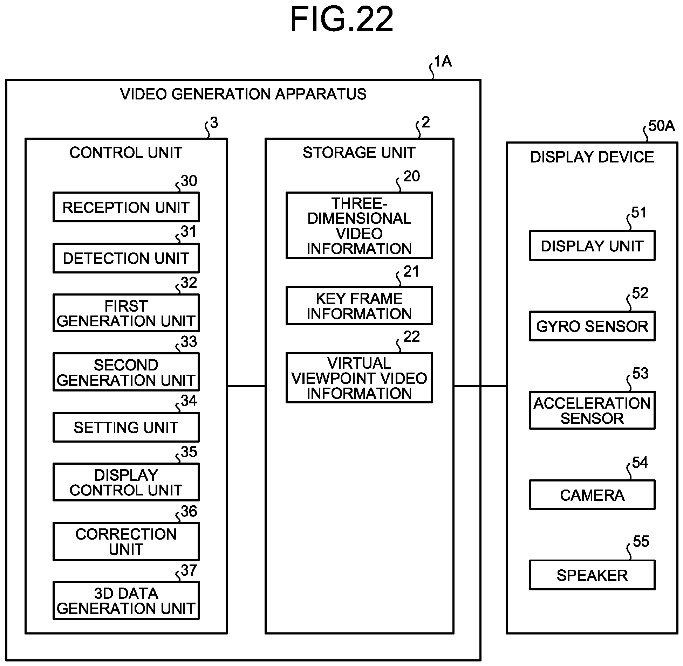

Next, a configuration example of a video generation apparatus according to the second embodiment will be described with reference to FIG. 22. FIG. 22 is a block diagram of the video generation apparatus according to the second embodiment. A video generation apparatus 1A illustrated in FIG. 22 differs from the video generation apparatus 1 according to the first embodiment in that the video generation apparatus 1A includes a 3D data generation unit 37.

Therefore, in FIG. 22, the 3D data generation unit 37 will be described, and description of other configurations will be omitted. The 3D data generation unit 37 generates 3D data from the background video of the virtual camera video generated by the first generation unit 32.

In other words, the 3D data generation unit 37 generates 3D data from the real world Sr shot by the user using the display device 50A. That is, in the video generation apparatus 1A according to the second embodiment, the virtual viewpoint video can be generated for the user, and the 3D data can be generated from the background video thereof. Note that the generation of the 3D data can be performed by appropriately using an existing algorithm.

In this way, 3D data of various types of three-dimensional virtual space can be generated, and thus, various types of three-dimensional space can be provided. Note that the display device 50A and the device having a camera function may be separate devices. In this case, the camera may be a flight vehicle (so-called drone), for example.

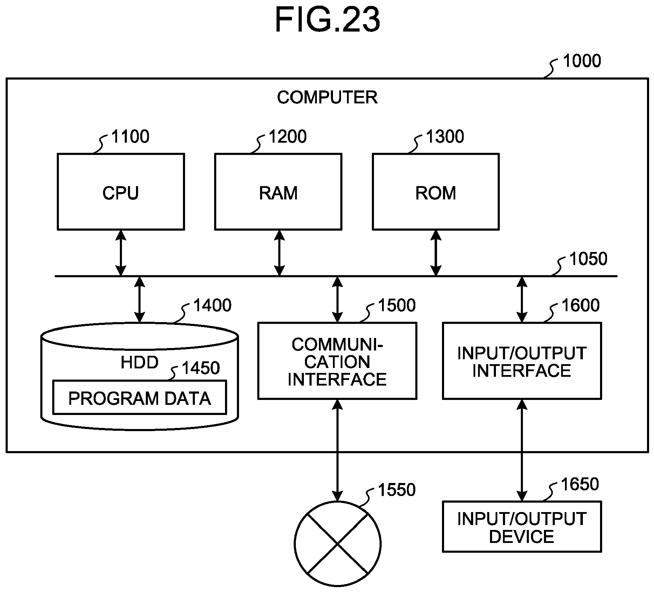

The information apparatuses such as the video generation apparatus, the HMD, and the controller according to the embodiments described above are each implemented by a computer 1000 having a configuration as illustrated in FIG. 23, for example. Hereinafter, the video generation apparatus 1 according to the embodiment will be described as an example. FIG. 23 is a hardware configuration diagram illustrating an example of the computer 1000 that implements functions of the video generation apparatus 1. The computer 1000 includes a CPU 1100, a RAM 1200, a read only memory (ROM) 1300, a hard disk drive (HDD) 1400, a communication interface 1500, and an input/output interface 1600. Each unit of the computer 1000 is coupled through a bus 1050.

The CPU 1100 operates on the basis of a program stored in the ROM 1300 or the HDD 1400, and controls each unit. For example, the CPU 1100 develops a program stored in the ROM 1300 or the HDD 1400 to the RAM 1200, and executes processing corresponding to various programs.

The ROM 1300 stores a boot program such as a basic input output system (BIOS) executed by the CPU 1100 when the computer 1000 is activated, and stores a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records a program according to the present disclosure, which is an example of program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for coupling an input/output device 1650 and the computer 1000. For example, the CPU 1100 receives data from an input device such as a keyboard or a mouse via the input/output interface 1600. In addition, the CPU 1100 transmits data to an output device such as a display, a speaker, or a printer via the input/output interface 1600. Furthermore, the input/output interface 1600 may function as a media interface that reads a program or the like recorded in a predetermined recording medium (medium). Examples of the medium include an optical recording medium such as a digital versatile disc (DVD) or a phase change rewritable disk (PD); a magneto-optical recording medium such as a magneto-optical disk (MO); a tape medium; a magnetic recording medium; and a semiconductor memory.

For example, when the computer 1000 functions as the video generation apparatus 1 according to the embodiment, the CPU 1100 of the computer 1000 implements the functions of the reception unit 30 or the like by executing the program loaded on the RAM 1200. In addition, the HDD 1400 stores the program according to the present disclosure and data in the storage unit 2. Note that the CPU 1100 reads the program data 1450 from the HDD 1400 and executes the program data. As another example, these programs may be acquired from another device via the external network 1550.

Note that the present technology can also have the following configurations.
(1) A video generation apparatus comprising:
   a reception unit configured to receive user operation;
   a first generation unit configured to generate a camera viewpoint video in which a three-dimensional object in three-dimensional virtual space is shot using a virtual camera by moving the virtual camera in the three-dimensional virtual space on a basis of the user operation received by the reception unit; and
   a display control unit configured to dispose a virtual screen in the three-dimensional virtual space and display a camera trajectory of the virtual camera in the three-dimensional virtual space, the virtual screen displaying the camera viewpoint video generated by the first generation unit.
(2) The video generation apparatus according to the above-described (1), further comprising
   a second generation unit configured to generate a user viewpoint video of viewing an inside of the three-dimensional virtual space from a user viewpoint set in the three-dimensional virtual space,
   wherein the display control unit displays the camera trajectory in the user viewpoint video.
(3) The video generation apparatus according to the above-described (1) to (2), wherein the display control unit displays, on the virtual screen, a seek bar indicating a playback position of the camera viewpoint video, and changes a playback position of the three-dimensional object and the playback position of the camera viewpoint video in accordance with user operation on the seek bar received by the reception unit.
(4) The video generation apparatus according to the above-described (1) to (3), wherein
   the reception unit receives movement operation of moving a controller in real space as the user operation, and
   the first generation unit generates the camera viewpoint video obtained by moving the virtual camera in accordance with a trajectory of the controller.
(5) The video generation apparatus according to the above-described (1) to (4), wherein the first generation unit generates the camera viewpoint video obtained by moving the virtual camera in accordance with the user operation while fixing a height of the virtual camera in a fixed mode in which the height of the virtual camera is fixed.
(6) The video generation apparatus according to the above-described (1) to (5), wherein
   the reception unit receives, as the user operation, setting of a point of interest with respect to the three-dimensional object, and
   the first generation unit generates the camera viewpoint video obtained by moving the virtual camera in accordance with the user operation while controlling a posture of the virtual camera such that a center of an angle of view of the virtual camera is directed to the point of interest.
(7) The video generation apparatus according to the above-described (1) to (6), wherein
   the display control unit displays a menu screen in the three-dimensional virtual space, and
   the reception unit receives user operation on the menu screen.
(8) The video generation apparatus according to the above-described (1) to (7), wherein
   the reception unit receives setting of a key frame in the camera viewpoint video, and
   the display control unit displays, in the camera trajectory, an icon indicating an imaging position of the key frame.
(9) The video generation apparatus according to the above-described (8) further comprising
   a correction unit configured to correct the camera trajectory on a basis of the key frame set by the user operation,
   wherein the first generation unit regenerates, at time of editing the camera viewpoint video, the camera viewpoint video obtained by such a manner that the virtual camera is moved along the camera trajectory corrected by the correction unit.
(10) The video generation apparatus according to the above-described (9), wherein the display control unit displays, in the three-dimensional virtual space, a guide line that assists a trajectory of the virtual camera.
(11) The video generation apparatus according to the above-described (10), wherein the correction unit corrects the imaging position and imaging time of the key frame such that the key frame is set on the guide line, and the correction unit corrects the camera trajectory in accordance with the corrected key frame.
(12) The video generation apparatus according to the above-described (9) to (11), wherein the correction unit corrects the imaging position of the key frame such that two or more consecutive time intervals between a plurality of the key frame or two or more consecutive distance intervals between the imaging positions of a plurality of the key frame are equal to each other.
(13) The video generation apparatus according to the above-described (9) to (12), wherein when the key frame is added or deleted by the user operation, the correction unit corrects the camera trajectory on a basis of the added or deleted key frame.
(14) The video generation apparatus according to the above-described (9) to (13), wherein the correction unit corrects the camera trajectory on a basis of a trajectory drawn by the user operation.
(15) The video generation apparatus according to the above-described (9) to (14), wherein the correction unit changes, in accordance with an illumination mode for the three-dimensional object, set by the user operation, the illumination mode for the three-dimensional object.
(16) The video generation apparatus according to the above-described (1) to (15), wherein the first generation unit generates the camera viewpoint video in which a screen size of the three-dimensional object is associated as meta information with each of a plurality of frames in the camera viewpoint video.
(17) The video generation apparatus according to the above-described (2), wherein
   the reception unit further receives user operation related to a position and a gaze direction of the user viewpoint in the three-dimensional virtual space, and
   the second generation unit controls the position and the gaze direction of the user viewpoint in the three-dimensional virtual space on a basis of the user operation received by the reception unit.
(18) The video generation apparatus according to the above-described (2), wherein the display control unit displays the user viewpoint video obtained by moving the user viewpoint along the camera trajectory.
(19) A method for generating a video, the method performed by a computer, the method comprising:
   receiving user operation;
   generating, from a virtual camera, a virtual viewpoint video in which a three-dimensional object being three-dimensional virtual space is shot, by moving the virtual camera on a basis of the received user operation; and
   displaying a camera trajectory of the virtual camera together with the three-dimensional object while displaying the generated virtual viewpoint video to a user.
(20) A program of generating a video, the program causing a computer to function as:
   a reception unit configured to receive user operation;
   a generation unit configured to generate, from a virtual camera, a virtual viewpoint video in which a three-dimensional object being a three-dimensional video is shot, by moving the virtual camera on a basis of the user operation received by the reception unit; and
   a display control unit configured to display a camera trajectory of the virtual camera together with the three-dimensional object while displaying, to a user, the virtual viewpoint video generated by the generation unit.

### Reference Signs List

- 1, 1A: VIDEO GENERATION APPARATUS
- 10: VIRTUAL CAMERA
- 30: RECEPTION UNIT
- 31: DETECTION UNIT
- 32: FIRST GENERATION UNIT
- 33: SECOND GENERATION UNIT
- 34: SETTING UNIT
- 35: DISPLAY CONTROL UNIT
- 36: CORRECTION UNIT
- 37: 3D DATA GENERATION UNIT
- 50, 50A: DISPLAY DEVICE
- 60: CONTROLLER
- T: CAMERA TRAJECTORY
- Sc1: VIRTUAL SCREEN

## Claims

1. A video generation apparatus comprising:
a reception unit configured to receive user operation;
a first generation unit configured to generate a camera viewpoint video in which a three-dimensional object in three-dimensional virtual space is shot using a virtual camera by moving the virtual camera in the three-dimensional virtual space on a basis of the user operation received by the reception unit; and
a display control unit configured to dispose a virtual screen in the three-dimensional virtual space and display a camera trajectory of the virtual camera in the three-dimensional virtual space, the virtual screen displaying the camera viewpoint video generated by the first generation unit.

2. The video generation apparatus according to claim 1, further comprising
a second generation unit configured to generate a user viewpoint video of viewing an inside of the three-dimensional virtual space from a user viewpoint set in the three-dimensional virtual space,
wherein the display control unit displays the camera trajectory in the user viewpoint video.

3. The video generation apparatus according to claim 1, wherein the display control unit displays, on the virtual screen, a seek bar indicating a playback position of the camera viewpoint video, and changes a playback position of the three-dimensional object and the playback position of the camera viewpoint video in accordance with user operation on the seek bar received by the reception unit.

4. The video generation apparatus according to claim 1, wherein
the reception unit receives movement operation of moving a controller in real space as the user operation, and
the first generation unit generates the camera viewpoint video obtained by moving the virtual camera in accordance with a trajectory of the controller.

5. The video generation apparatus according to claim 1, wherein the first generation unit generates the camera viewpoint video obtained by moving the virtual camera in accordance with the user operation while fixing a height of the virtual camera in a fixed mode in which the height of the virtual camera is fixed.

6. The video generation apparatus according to claim 1, wherein
the reception unit receives, as the user operation, setting of a point of interest with respect to the three-dimensional object, and
the first generation unit generates the camera viewpoint video obtained by moving the virtual camera in accordance with the user operation while controlling a posture of the virtual camera such that a center of an angle of view of the virtual camera is directed to the point of interest.

7. The video generation apparatus according to claim 1, wherein
the display control unit displays a menu screen in the three-dimensional virtual space, and
the reception unit receives user operation on the menu screen.

8. The video generation apparatus according to claim 1, wherein
the reception unit receives setting of a key frame in the camera viewpoint video, and
the display control unit displays, in the camera trajectory, an icon indicating an imaging position of the key frame.

9. The video generation apparatus according to claim 8, further comprising
a correction unit configured to correct the camera trajectory on a basis of the key frame set by the user operation,
wherein the first generation unit regenerates, at time of editing the camera viewpoint video, the camera viewpoint video obtained by such a manner that the virtual camera is moved along the camera trajectory corrected by the correction unit.

10. The video generation apparatus according to claim 9, wherein the display control unit displays, in the three-dimensional virtual space, a guide line that assists a trajectory of the virtual camera.

11. The video generation apparatus according to claim 10, wherein the correction unit corrects the imaging position and imaging time of the key frame such that the key frame is set on the guide line, and the correction unit corrects the camera trajectory in accordance with the corrected key frame.

12. The video generation apparatus according to claim 9, wherein the correction unit corrects the imaging position of the key frame such that two or more consecutive time intervals between a plurality of the key frame or two or more consecutive distance intervals between the imaging positions of a plurality of the key frame are equal to each other.

13. The video generation apparatus according to claim 9, wherein when the key frame is added or deleted by the user operation, the correction unit corrects the camera trajectory on a basis of the added or deleted key frame.

14. The video generation apparatus according to claim 9, wherein the correction unit corrects the camera trajectory on a basis of a trajectory drawn by the user operation.

15. The video generation apparatus according to claim 9, wherein the correction unit changes, in accordance with an illumination mode for the three-dimensional object, set by the user operation, the illumination mode for the three-dimensional object.

16. The video generation apparatus according to claim 1, wherein the first generation unit generates the camera viewpoint video in which a screen size of the three-dimensional object is associated as meta information with each of a plurality of frames in the camera viewpoint video.

17. The video generation apparatus according to claim 2, wherein
the reception unit further receives user operation related to a position and a gaze direction of the user viewpoint in the three-dimensional virtual space, and
the second generation unit controls the position and the gaze direction of the user viewpoint in the three-dimensional virtual space on a basis of the user operation received by the reception unit.

18. The video generation apparatus according to claim 2, wherein the display control unit displays the user viewpoint video obtained by moving the user viewpoint along the camera trajectory.

19. A method for generating a video, the method performed by a computer, the method comprising:
receiving user operation;
generating, from a virtual camera, a virtual viewpoint video in which a three-dimensional object being three-dimensional virtual space is shot, by moving the virtual camera on a basis of the received user operation; and
displaying a camera trajectory of the virtual camera together with the three-dimensional object while displaying the generated virtual viewpoint video to a user.

20. A program of generating a video, the program causing a computer to function as:
a reception unit configured to receive user operation;
a generation unit configured to generate, from a virtual camera, a virtual viewpoint video in which a three-dimensional object being a three-dimensional video is shot, by moving the virtual camera on a basis of the user operation received by the reception unit; and
a display control unit configured to display a camera trajectory of the virtual camera together with the three-dimensional object while displaying, to a user, the virtual viewpoint video generated by the generation unit.
